# EUROPEAN PATENT SPECIFICATION

(11) **EP 3 138 458 B1**
(45) Date of publication and mention of the grant of the patent: **23.09.2020**
(21) Application number: 14890529.2
(22) Date of filing: 12.05.2014
(51) Int. Cl.: A47L 9/28, G05D 1/02

(54) **ROBOTIC VACUUM CLEANER AND CONTROL METHOD THEREFOR**
ROBOTISCHER STAUBSAUGER UND STEUERUNGSVERFAHREN DAFÜR
ROBOT ASPIRATEUR ET SON PROCÉDÉ DE COMMANDE

(30) Priority: 02.05.2014 KR 20140053662
(43) Date of publication of application: 08.03.2017
(73) Proprietor: Everybot Inc., Gyeonggi-do 461-831 (KR)
(72) Inventor: SONG, Chang Nam, Jeju-si Jeju-do 690-802 (KR); KIM, Bong Yun, Jeju-si Jeju-do 690-802 (KR)
(74) Representative: Ziebig & Hengelhaupt Patent- und Rechtsanwaltskanzlei PartG mbB
(86) International application number: PCT/KR2014/004242
(87) International publication number: WO 2015/167060

(56) References cited:
- EP-A2- 1 977 673
- EP-A2- 2 457 486
- JP-A- 2004 147 963
- JP-A- 2004 147 963
- JP-A- 2012 135 384
- KR-A- 20000 002 309
- KR-A- 20140 045 743

## Description

### [Technical Field]

The present invention relates to a robot cleaner and a method for controlling the same, and more particularly, to a robot cleaner capable of performing concentrative cleaning on a specific region, and a method for controlling the same.

### [Background Art]

In accordance with the development of an industrial technology, various apparatuses have been automated. As well known, a robot cleaner has been utilized as a device automatically cleaning a target zone to be cleaned by sucking foreign materials such as dust, and the like, from a surface to be cleaned or sweeping the foreign materials on the surface to be cleaned while being spontaneously traveled within the target zone to be cleaned without being manipulated by a user.

Generally, the robot cleaner may include a vacuum cleaner performing cleaning using suction force by a power source such as electricity, or the like.

In addition, the robot cleaner including the vacuum cleaner as described above does not remove foreign materials, an ingrained stain, and the like, stuck to the surface to be cleaned. Therefore, recently, a robot cleaner capable of performing damp cloth mopping or dustcloth cleaning by including a cotton cleaner such as dustcloth, or the like, attached thereto has emerged.

However, in a cleaning method using a general robot cleaner, the robot cleaner moves in only a predetermined pattern. Therefore, even in the case in which the cleaning ends, dust may remain, and the cleaning is not efficiently performed.

For example, even in the case of robot cleaners recognizing an image or a position and then performing cleaning, the cleaning is finished when a pattern ends. Therefore, it is impossible to completely remove dust on a floor. Further, the dust on the floor may be partially spread to a zone on which the cleaning is already performed by rotation of a side rotation brush, or the like. However, a cleaning method for effectively solving the problems described above has not been suggested.

Further, in the case of the dustcloth cleaning method using the general robot cleaner, the general robot cleaner is traveled using a moving pattern, an obstacle avoiding method, and the like, for an existing suction type vacuum cleaner. Therefore, even though dust, and the like, scattered on the surface to be cleaned is removed, foreign materials, and the like, stuck to the surface to be cleaned may not be easily removed.
In JP 2004 147963 a self-propelled device is disclosed, which is capable of automatically traveling in a room, in which furniture and the like are placed in a complicated arrangement, without leaving uncleaned areas. The self-propelled device comprises a pattern cleaning means, which performs cleaning according to a predetermined pattern, an uncleaned area confirming means for confirming uncleaned areas after completing the pattern cleaning based on information stored in a cleaning trajectory storage means, and a re-cleaning means, which performs cleaning again when there remain uncleaned areas and stops cleaning when there remains no uncleaned area. The device further comprises an autonomous control means for controlling a travel control means and a cleaning means to perform cleaning, and the pattern cleaning means performs the pattern cleaning referring to the information of a cleaning information storage means when it performs cleaning at the second or later time. As a result, even at the first cleaning it can perform cleaning again in areas left uncleaned after cleaning according to a predetermined travel pattern, and at the second or later cleaning it can travel effectively based on the previous cleaning information to leave no uncleaned area.
EP 2 457 486 A2 describes a robot cleaner including a main brush to sweep or scatter dust off a floor, a main brush motor to rotate the main brush, a Revolution Per Minute detector to detect an RPM of the main brush motor, and a control unit to determine a type of floor according to the RPM of the main brush motor acquired by the RPM detector and control an operation of the robot cleaner based on the determined type of floor. A carpet mode to clean only a carpet area and a hard floor mode to clean a hard floor area excluding the carpet area are given based on detected information relating to the material of a floor, which enables partial cleaning with respect to a cleaning area selected by a user and adjustment in the number of cleaning operations or the intensity of cleaning according to the material of the floor.
EP 1 977 673 A2 is disclosing a robot cleaner that cleans a cleaning region while traveling the cleaning region and a method to control the same are provided. The robot cleaner can uniformly clean a cleaning region based on a wall-following technique which allows the robot cleaner to travel along the outline of the cleaning region. The method selects, as a reference wall, a wall at a left or right side of the robot cleaner at a start position of the robot cleaner based on a left or right-based travel algorithm, which allows the robot cleaner to travel along a left or right wall, and controls the robot cleaner to travel the cleaning region in a zigzag travel pattern in which the robot cleaner moves a predetermined distance in a direction perpendicular to the reference wall at specific intervals along the selected reference wall while following the selected reference wall.

### [Disclosure]

### [Technical Problem]

An object of the present invention is to provide a robot cleaner capable of efficiently cleaning a portion in which additional cleaning is required as well as a zone in which cleaning is not performed, and a method for controlling the same.

Another object of the present invention is to provide a robot cleaner capable of increasing cleaning efficiency in dustcloth cleaning as well as performing deep cleaning, and a method for controlling the same.

### [Technical Solution]

According to an exemplary embodiment of the present invention, a robot cleaner includes: an input unit receiving a user input; a storing unit storing traveling patterns for traveling the robot cleaner therein; and a control unit controlling primary traveling of the robot cleaner on the basis of the traveling patterns stored in the storing unit depending on the user input and determining a depth for additional cleaning depending on environment information collected at the time of the primary traveling of the robot cleaner.

According to another exemplary embodiment of the present invention, a method for controlling a robot cleaner includes: storing traveling patterns for traveling the robot cleaner; receiving a user input; controlling primary traveling of the robot cleaner on the basis of the stored traveling patterns depending on the user input; and determining a depth for additional cleaning depending on environment information collected at the time of the primary traveling of the robot cleaner.

The method for controlling a robot cleaner may be implemented by a computer-readable recording medium in which a program that is to be executed in a computer is recorded.

### [Advantageous Effects]

In the method for controlling a robot cleaner according to an exemplary embodiment of the present invention, the robot cleaner may repeatedly advance and reverse on the basis of a reference area along a curved radial route, and a proceeding direction of the robot cleaner may be changed toward a specific direction by a predetermined angle per repetition point in time, thereby making it possible to control the robot cleaner to concentratively clean an inner portion of a circle having a diameter corresponding to a specific distance and improve efficiency of the concentrative cleaning.

In addition, in the method for controlling a robot cleaner according to an exemplary embodiment of the present invention, when the obstacle is detected, the robot cleaner reverses along the curved radial route and rotates at the same plate by a predetermined angle to avoid the obstacle, thereby making it possible to perform cleaning up to corner places without being significantly affected by a complicated structure or the obstacle even though the complicated structure or the obstacle is present.

### [Description of Drawings]

FIG. 1 is a view schematically illustrating an appearance of a robot cleaner according to an exemplary embodiment of the present invention.
FIG. 2 is a block diagram illustrating components of the robot cleaner according to an exemplary embodiment of the present invention in more detail.
FIGS. 3 and 4 are flow charts illustrating a method for controlling a robot cleaner according to an exemplary embodiment of the present invention.
FIGS. 5 to 9 are views for describing repeated traveling of a robot cleaner according to an exemplary embodiment of the present invention depending on a depth.
FIGS. 10 and 11 are flow charts for describing a method for controlling a robot cleaner according to another exemplary embodiment of the present invention.

### [Best Mode]

The following description illustrates only a principle of the present invention. Therefore, those skilled in the art may implement the principle of the present invention and invent various apparatuses included in the spirit and scope of the present invention although not clearly described or illustrated in the present specification. In addition, it is to be understood that all conditional terms and exemplary embodiments mentioned in the present specification are obviously intended only to allow those skilled in the art to understand a concept of the present invention in principle, and the present invention is not limited to exemplary embodiments and states particularly mentioned as such.

Further, it is to be understood that all detailed descriptions mentioning specific exemplary embodiments of the present invention as well as principles, aspects, and exemplary embodiments of the present invention are intended to include structural and functional equivalences thereof. Further, it is to be understood that these equivalences include an equivalence that will be developed in the future as well as an equivalence that is currently well-known, that is, all devices invented so as to perform the same function regardless of a structure.

Therefore, it is to be understood that, for example, block diagrams of the present specification illustrate a conceptual aspect of an illustrative circuit for embodying a principle of the present invention. Similarly, it is to be understood that all flow charts, state transition diagrams, pseudo-codes, and the like, illustrate various processes that may be tangibly embodied in a computer-readable medium and that are executed by computers or processors regardless of whether or not the computers or the processors are clearly illustrated.

Functions of various devices including processors or functional blocks represented as concepts similar to the processors and illustrated in the accompanying drawings may be provided using hardware having capability to execute appropriate software as well as dedicated hardware. When the functions are provided by the processors, they may be provided by a single dedicated processor, a single shared processor, or a plurality of individual processors, and some of them may be shared.

In the claims of the present specification, components represented as means for performing functions mentioned in a detailed description are intended to include all methods of performing functions including all types of software including, for example, a combination of circuit devices performing these functions, firmware/micro codes, or the like, and are coupled to appropriate circuits for executing the software so as to execute these functions. It is to be understood that since functions provided by variously mentioned means are combined with each other and are combined with a method demanded by the claims in the present invention defined by the claims, any means capable of providing these functions are equivalent to means recognized from the present specification.

The above-mentioned objects, features, and advantages will become more obvious from the following detailed description associated with the accompanying drawings. Therefore, those skilled in the art to which the present invention pertains may easily practice a technical idea of the present invention. Further, in describing the present invention, in the case in which it is decided that a detailed description of a well-known technology associated with the present invention may unnecessarily make the gist of the present invention unclear, it will be omitted.

Hereinafter, various exemplary embodiments of the present invention will be described in detail with reference to the accompanying drawings.

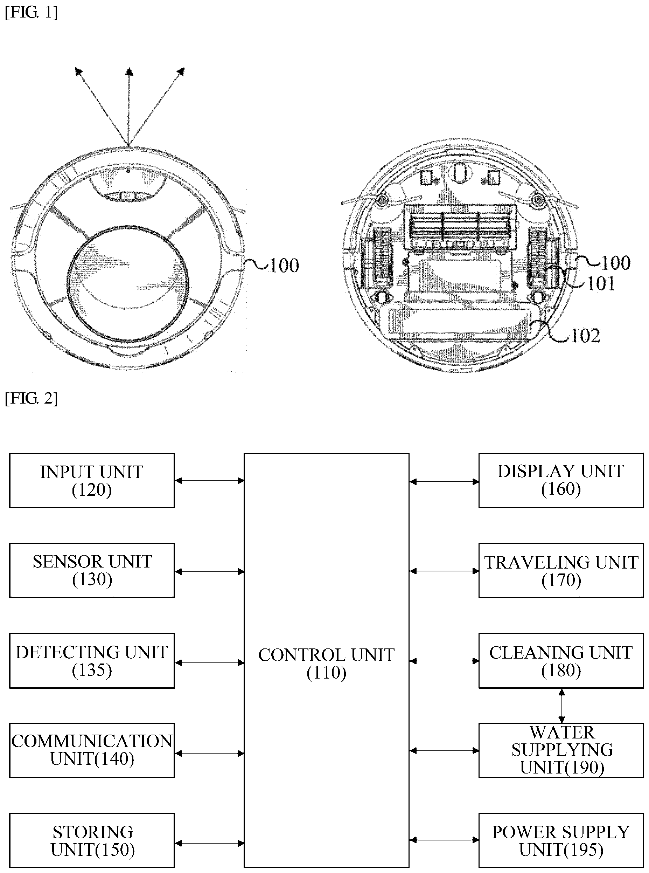

FIG. 1 is a view schematically illustrating an appearance of a robot cleaner according to an exemplary embodiment of the present invention, and FIG. 2 is a block diagram illustrating components of the robot cleaner according to an exemplary embodiment of the present invention in more detail.

Referring to FIG. 1, the robot cleaner 100 according to an exemplary embodiment of the present invention may be traveled in a specific direction on the basis of a predetermined traveling pattern in the case in which a user input is present. To this end, as illustrated in the right of FIG. 1, at least one rotation member 101 for traveling may be coupled to a lower end of the robot cleaner 100, and a traveling direction and a traveling angle of the robot cleaner 100 may be controlled by rotation of the at least one rotation member 101. The at least one rotation member 101 may be two or more wheels of which driving is controlled by, for example, a motor.

In addition, a cotton cleaner for dustcloth cleaning may be attached to a lower portion of the robot cleaner 100 according to an exemplary embodiment of the present invention. To this end, the robot cleaner 100 may further include a cleaner attachment module 102. The cleaner attached to the robot cleaner 100 may be formed of a fiber material such as cloth that may sweep various surfaces to be cleaned, such as superfine fiber cloth, dustcloth, non-woven fabric, brush, and the like, so as to remove foreign materials stuck to a bottom surface. In addition, although not illustrated in FIG. 1, a water supplying unit 190 for improving dustcloth cleaning capability of the cleaner may be further included in the robot cleaner 100.

Particularly, according to an exemplary embodiment of the present invention, a traveling velocity and a traveling angular velocity of the robot cleaner 100 may be changed in real time on the basis of stored traveling patterns. Therefore, cleaning patterns according to an exemplary embodiment of the present invention may be performed.

In more detail, referring to FIG. 2, the robot cleaner 100 according to an exemplary embodiment of the present invention includes an input unit 120, a sensor unit 130, a detecting unit 135, a communication unit 140, a storing unit 150, a display unit 160, a traveling unit 170, a cleaning unit 180, a water supplying unit 190, and a power supply unit 195.

The input unit 120 may receive a button manipulation input by a user or receive a command or a control signal. The input unit 120 may generate input data for controlling an operation of the robot cleaner 100 by the user, and may be formed of a keypad, a dome switch, a touch pad (a resistive or capacitive touch pad), a jog wheel, a jog switch, or the like. The user may select a desired function or input information through the input unit 120.

In addition, the input unit 120 may receive a mode input corresponding to a traveling pattern according to an exemplary embodiment of the present invention or receive a mode key input, a sweep mode input, a traveling start or traveling end input, and the like. To this end, the input unit 120 may include various buttons for receiving the respective mode inputs, a soft button implemented by a touch screen, or the like.

The sensor unit 130 may be provided on a side surface of the robot cleaner 100 in order to detect an obstacle.

The sensor unit 130 senses a surrounding state of the robot cleaner 100 to generate a sensed signal for controlling an operation of the robot cleaner 100. In addition, the sensor unit 130 may transfer the sensed signal detected depending on the surrounding state to the detecting unit 135. The sensor unit 130 may include an obstacle detecting sensor transmitting an infrared or ultrasonic signal to the outside and receiving a signal reflected from an obstacle. In addition, the sensor unit 130 may include a camera sensor generating image information and transmitting the generated image information or filtering the image information and outputting sensed surrounding information, or the like.

In addition, the sensor unit 130 may include a dust sensor connected to the cleaning unit 180 of the robot cleaner 100 and sensing an amount of dust introduced into the cleaning unit 180. An example of the dust sensor may include an optical dust sensor transmitting light to dust introduced into the cleaning unit 180 using an infrared source, a light emitting diode (LED), or the like, and receiving light reflected from the dust. In addition, the sensor unit 130 may further include a humidity sensor for detecting humidity.

The detecting unit 135 may detect an object, an obstacle, or the like, present in any specific area on the basis of the information sensed in the sensor unit 130. For example, the detecting unit 135 may detect an obstacle positioned in front of the robot cleaner 100 on the basis of a proceeding direction or detect an obstacle positioned behind the robot cleaner 100 on the basis of the proceeding direction. The detecting unit may detect a position of the obstacle and a distance up to the obstacle or collision with the obstacle from an ultrasonic sensor signal, an infrared sensor signal, a radio frequency (RF) sensor signal, or image data detected in the sensor unit 130.

The communication unit 140 may include one or more modules enabling wireless communication between the robot cleaner 100 and another wireless terminal or between the robot cleaner 100 and a network in which another wireless terminal is positioned. For example, the communication unit 140 may communicate with a wireless terminal, which is a remote controller. To this end, the communication unit 140 may include a near field communication module, a wireless Internet module, or the like.

An operation state, an operation method, or the like, of the robot cleaner 100 may be controlled by a control signal received by the communication unit 140 as described above. An example of a terminal controlling the robot cleaner 100 may include a smart phone, a tablet personal computer, a personal computer, a remote controller, and the like, that may communicate with the robot cleaner 100.

Meanwhile, the storing unit 150 may store various user interfaces or graphic user interfaces therein or store a program for an operation of a control unit 110 therein, and temporarily store input/output data therein. The storing unit 150 may include at least one of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

Particularly, according to an exemplary embodiment of the present invention, the storing unit 150 may store information on information on one or more traveling patterns therein. The one or more traveling patterns may include, for example, grating traveling patterns.

In addition, the storing unit 150 may store environment information generated depending on the traveling of the robot cleaner according to an exemplary embodiment of the present invention therein. The environment information may include various information received from the respective different configuration modules. For example, the environment information may include at least one of accumulated cleaning time information, cleaning map information, battery remaining capacity information, and dust introduction amount information.

The display unit 160 may be provided on an upper surface or a side surface of the robot cleaner 100, and may display various information generated by the control unit 110. Here, the display unit 160 may include at least one of a liquid crystal display (LCD), a thin film transistor-liquid crystal display (TFT LCD), an organic light-emitting diode (OLED), a flexible display, a field emission display (FED), a 3D display, and a transparent display.

In addition, the display unit 160 may further include a sound output module, an alarm unit, and the like.

The traveling unit 170 generates a control signal for rotating the rotation member depending on a control of the control unit 110. The traveling unit 170 may be formed of an assembly coupled to a motor, a gear, and the like, in order to drive one or more rotation members.

The traveling unit 170 may perform a traveling operation such as movement, stop, a velocity control, a direction change, or an angular velocity change, or the like, by a control of the control unit 110. To this end, sensors such as an encoder, and the like, may be connected to the traveling unit 170.

Meanwhile, the cleaning unit 180 may be provided on a lower surface of the robot cleaner 100, and performs a cleaning operation of absorbing foreign materials below the robot cleaner 100 or conducting mopping when the robot cleaner 100 is moving or is being stopped, by a control of the control unit 110. In addition, the cleaning unit 180 may further include an air purifying unit purifying pollutants in the air.

Particularly, in an exemplary embodiment of the present invention, the cleaning unit 180 may include the cleaner attachment module 102. A cotton cleaner such as dustcloth, or the like, may be attached to the cleaner attachment module 102. Therefore, when the cotton cleaner is attached to the cleaning unit 180, the robot cleaner 100 may perform dustcloth cleaning for sweeping foreign materials stuck to the bottom surface by friction between the robot cleaner 100 and the bottom surface.

The water supplying unit 190 continuously supplies water through the cleaner attachment module 102 as described above, thereby making it possible to improve sweeping performance of the cleaner. For example, the water supplying unit 190 may perform a control so that the water is continuously supplied to the dustcloth in the case in which the dustcloth is attached. An amount of supplied water may be controlled by a function of the water supplying unit 190 itself or be physically controlled by the control unit 110.

The control unit 110 usually controls a general operation of the robot cleaner 100. For example, the control unit 110 performs processes and controls related to cleaning time decision, cleaning route determination, traveling pattern selection, obstacle avoidance, and the like.

Particularly, according to an exemplary embodiment of the present invention, the control unit 110 determines a depth for additional cleaning while primarily performing a traveling pattern selected depending on a user input among the traveling patterns stored in the storing unit 150.

In more detail, the control unit 110 may control primary traveling of the robot cleaner on the basis of the traveling patterns stored in the storing unit 150 depending on the user input, and determine the depth for the additional cleaning depending on environment information collected at the time of the primary traveling of the robot cleaner.

In addition, the control unit 110 may determine traveling patterns for each order depending on the depth, and additionally control the traveling of the robot cleaner depending on the traveling patterns determined for each order after the primary traveling is finished.

The environment information may include the battery remaining capacity information, the accumulated cleaning time information, the cleaning map information, the dust introduction amount information, or the like, as described above.

Therefore, the control unit 110 may determine the depth on the basis of a battery remaining capacity of the power supply unit of the robot cleaner predicted after the primary traveling or determine the depth depending on an amount of introduced dust sensed in the sensor unit 130 during the primary traveling.

In addition, the control unit 110 may determine the number of times of repetition of a specific traveling pattern depending on the determined depth.

For example, in the case in which the specific traveling pattern includes a grating traveling pattern, the control unit 110 may repeatedly perform the grating traveling pattern depending on the determined depth. In addition, the control unit 110 may control the robot cleaner 100 to rotate at the same place to change an initial direction of the robot cleaner by 90 degrees to increase efficiency of the grating traveling pattern, whenever the grating traveling pattern repeatedly starts.

In addition, the control unit 110 may determine the depth on the basis of map information corresponding to traveling spaces accumulated up to a point in time in which the primary traveling is finished. For example, in the case in which it is decided that a predetermined ratio or more is not currently covered in an entire space in a room when performance of the primary traveling pattern is finished on the basis of the map information, the control unit 110 may increase a depth level.

Meanwhile, in the case in which a sweep mode is selected depending on a user input, the control unit 110 may further improve efficiency of the dustcloth cleaning by applying characteristics of the robot cleaner returned by a second distance shorter than a first distance along a predetermined route when the robot cleaner is traveled by the first distance along the predetermined route, with respect to a traveling pattern that is being currently performed. This will be described below.

In addition, the power supply unit 195 supplies operation power of the robot cleaner 100, and stores power supplied from an external power supply therein or is charged with the power. To this end, the power supply unit 195 may include one or more batteries. The power supply unit 195 may receive the power from the external power supply in a wired or wireless charging scheme. The battery remaining capacity information of the power supply unit 195 may be included in the environment information, and may be stored and updated in the storing unit 150.

As described above, the control unit 110 controls the robot cleaner to perform repeated traveling depending on the depth determined depending on the environment information collected in the primary traveling, thereby making it possible to improve cleaning efficiency. In addition, the control unit decides a case in which the cleaning is not performed well or an area that is not covered, and determines the depth level in consideration of the battery remaining capacity, thereby making it possible to omit an unnecessary additional cleaning input step by the user.

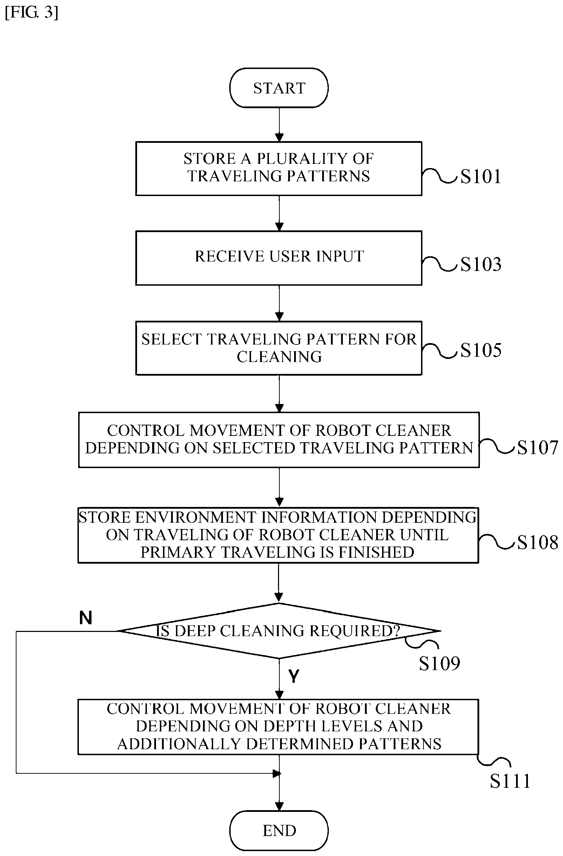

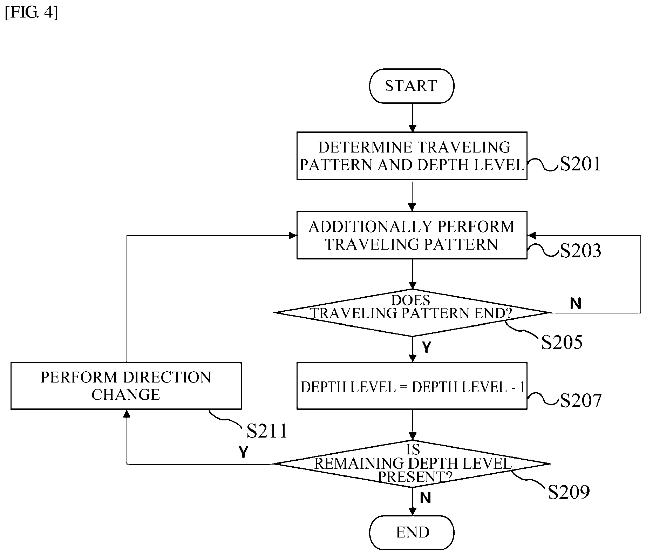

FIGS. 3 and 4 are flow charts illustrating a method for controlling a robot cleaner 100 according to an exemplary embodiment of the present invention.

Referring to FIG. 3, the robot cleaner 100 according to an exemplary embodiment of the present invention stores a plurality of traveling patterns (S101).

The storing unit 150 may store a plurality of traveling patterns that are predetermined therein, as described above. The plurality of traveling patterns may include traveling patterns for general cleaning, and may include the grating traveling pattern according to an exemplary embodiment of the present invention.

In addition, the storing unit 150 may further include scheduling information for performing a combination of various cleaning patterns. The scheduling information may include sequence information of the traveling patterns and time information corresponding to the respective traveling patterns. Here, the information on each of the traveling patterns or the scheduling information stored in the storing unit 150 may be pre-stored in a non-volatile memory or be temporarily stored in a volatile memory.

Here, the traveling patterns and the scheduling information stored in the storing unit 150 may be updated at a predetermined period, be updated whenever the robot cleaner 100 is connected to the Internet network, or the like, or be received from a network whenever the robot cleaner 100 starts cleaning and be temporally stored, through the communication unit 140. Therefore, whenever appropriate traveling patterns and scheduling information on the appropriate traveling patterns are improved, the user may update the appropriate traveling patterns and the scheduling information, thereby making it possible to improve performance in real time.

Then, the robot cleaner 100 receives a user input for starting the cleaning (S103).

In addition, the robot cleaner 100 selects the traveling pattern depending on the user input (S105), and controls movement of the robot cleaner depending on the selected pattern (S107).

When a cleaning pattern is selected on the basis of the user input, the control unit 110 may control the movement of the robot cleaner depending on the selected cleaning pattern. In the case in which the selected cleaning pattern the grating traveling pattern, the robot cleaner may scan an initial cleaning area and be traveled in the scanned cleaning area depending on the grating traveling pattern. The grating traveling pattern as described above may be differently performed depending on the depth. Movement of the robot cleaner depending on the grating traveling pattern at each depth will be described in more detail.

Then, the robot cleaner 100 stores the environment information depending on the traveling of the robot cleaner collected until the primary traveling is finished depending on the selected traveling pattern (S108).

The robot cleaner 100 is traveled for a predetermined time depending on the selected traveling pattern or is traveled up to a predetermined point, thereby making it possible to finish the primary traveling. During a period in which the primary traveling is performed, the robot cleaner 100 may collect the surrounding environment information, and accumulate and store the surrounding environment information in the storing unit 150, in order to analyze a cleaning state and a state of the robot cleaner 100 itself.

For example, the environment information may include the dust introduction amount information collected from the sensor unit 130. In addition, the environment information may include the map information generated depending on the traveling of the robot cleaner 100 in the control unit 110. In addition, the environment information may include the battery remaining capacity information identified from the power supply unit 195.

In addition, the robot cleaner 100 decides whether or not deep cleaning is required (S109), and additionally controls the movement of the robot cleaner depending on depth levels and additional traveling patterns (S111) in the case in which the deep cleaning is required.

The control unit 110 may decide whether or not the deep cleaning is required on the basis of the accumulated environment information, and determine the depth levels and additional traveling patterns for each of the depth levels. The depth level may indicate the number of times of repeated performance of the traveling patterns, and kinds of traveling patterns may be different from each other per the number of times of repeated performance.

For example, when an amount of introduced dust is a predetermined value or more, the control unit 110 may determine the number of times of deep cleaning. In addition, the control unit 110 may determine traveling patterns corresponding to each of the depth levels. The respective traveling patterns may include various traveling patterns such as a concentrative cleaning pattern in which the robot cleaner moves in a spiral form on the basis of a specific position, a grating traveling pattern in which the robot cleaner covers a specific zone in a grating form, a random traveling pattern. For example, in the case in which the amount of introduced dust is high, the control unit 110 may decide that the depth level is 4, and determine that the grating traveling pattern is repeatedly performed four times depending on the depth level.

In addition, the control unit 110 may decide whether or not the deep cleaning is required on a portion in which cleaning for a specific zone is insufficient on the basis of the map information and the dust introduction amount information. In this case, the control unit 110 may control the robot cleaner to move to a zone in which the amount of introduced dust is high and repeatedly perform the traveling patterns for each of the depth levels on the corresponding zone, on the basis of the map information generated depending on the primary traveling.

In addition, the control unit 110 may decide whether or not the deep cleaning is required on the basis of battery information. For example, the control unit 110 may compare a time required for the primary traveling and a battery consumption time with each other to decide whether or not the deep cleaning is required, predict battery consumption depending on the repeated traveling, and appropriately determine the depth level.

Hereinafter, cleaning performing processes of the robot cleaner according to an exemplary embodiment of the present invention will be described in more detail.

FIG. 4 is a view for describing processes after the primary traveling is finished. Referring to FIG. 4, the robot cleaner 100 determines a cleaning traveling pattern and a depth level depending on the collected environment information (S201), and additionally performs a cleaning traveling pattern depending on the determined depth level and the determined cleaning traveling pattern (S203).

As described above, the control unit 110 may determine the depth level on the basis of the environment information accumulated during a period in which the primary traveling is performed. In addition, the control unit 110 may determine the number of times of repetition of a specific traveling pattern depending on the depth level.

The environment information may include, for example, the battery information, the map information, the dust introduction amount information, or the like, as described above.

In addition, the control unit 110 may determine an appropriate depth level by synthesizing several kinds of information rather than one information from the environment information.

For example, the control unit 110 may determine a maximum depth level at which the robot cleaner may be repeatedly traveled until before a battery is discharged on the basis of a room size depending on the map information and the battery information. In addition, the control unit 110 may determine the depth level on the basis of the dust introduction amount information and the battery information, determine the depth level on the basis of the map information and the dust introduction amount information, and determine the depth level by aggregatively deciding all of the collected environment information.

In addition, the control unit 110 may determine a kind of cleaning traveling pattern repeated by each of the depth levels. In addition, the control unit 110 may allow the determined cleaning traveling pattern to be additionally performed repeatedly depending on the depth level. Kinds of traveling patterns may be differently designated per repeated performing order.

Then, the robot cleaner 100 decides whether or not the traveling pattern ends (S205), and decreases the depth level by 1 (S207) when the traveling pattern ends.

In addition, in the case in which a remaining depth level is present, the robot cleaner 100 performs a direction change on a current proceeding direction (S211) in order to apply an additional traveling pattern in another direction, and again additionally perform the traveling pattern (S203). The robot cleaner 100 may end the traveling in the case in which the remaining depth level is not present. However, S211 may also be omitted depending on which traveling pattern is additionally performed.

As described above, according to an exemplary embodiment of the present invention, when the depth level depending on the primary traveling of the robot cleaner 100 is determined, the depth level is decreased depending on a repetition order of the traveling pattern, thereby making it possible to end the cleaning at an appropriate timing.

The depth level of the robot cleaner 100 is determined as described above, such that the repeated cleaning is not forcibly performed, but may be appropriately performed. Particularly, as described above, the control unit 110 may decide whether or the deep cleaning is required on the basis of the battery information, such that the repeated cleaning may be significantly efficiently performed in consideration of discharge of the battery as well as a cleaning level.

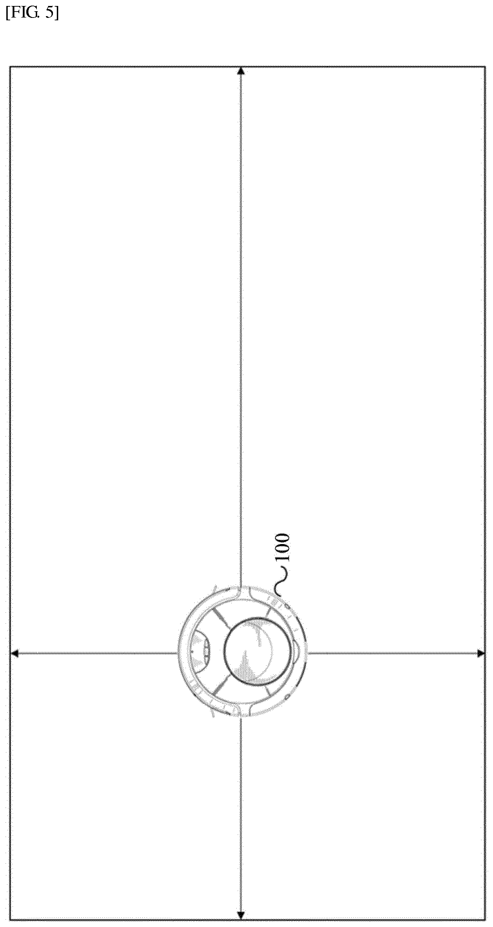

FIGS. 5 to 9 are, which are views illustrating movement of a robot cleaner 100 according to an exemplary embodiment of the present invention, are views for describing addition traveling patterns depending on a depth level in the case in which a grating traveling mode is first selected.

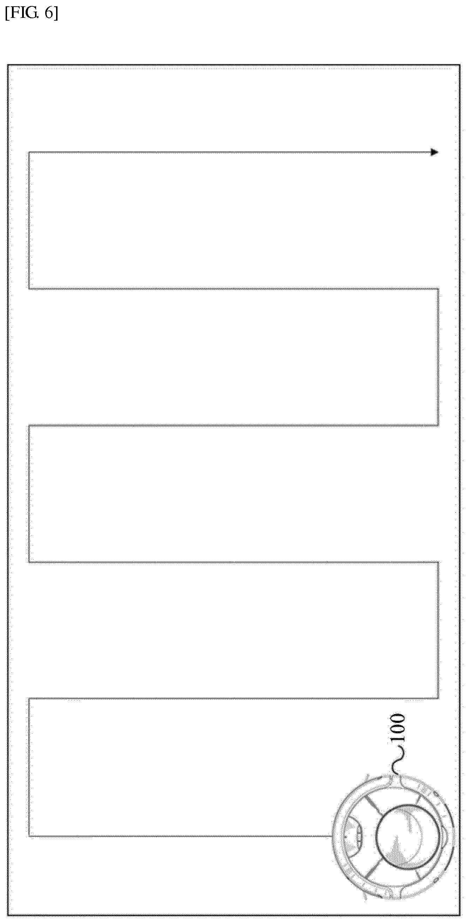

Referring to FIGS. 5 to 9, first, when the grating traveling mode is selected in the robot cleaner 100, an area for performing the grating traveling pattern may be set, as illustrated in FIG. 5, and the grating traveling pattern may be performed as the primary traveling, as illustrated in FIG. 6.

Here, the grating traveling pattern may mean a pattern in which the robot cleaner is traveled in a ' 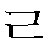 ' form in an area. According to the grating traveling pattern, the robot cleaner 100 may proceed while covering a predetermined map area in the ' 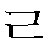 ' form, and may proceed while avoiding the obstacle in the ' 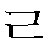 ' form whenever the obstacle detected in the detecting unit 135 is found for a predetermined time. However, in an exemplary embodiment of the present invention, a case in which the robot cleaner is traveled in the map region predetermined by the area setting method as illustrated in FIG. 5 and received from the outside will be described, for convenience of explanation.

Then, the robot cleaner 100 may determine the depth level when the primary traveling is finished, on the basis of the environment information collected during being traveled in FIG. 6. For example, in the case in which it is decided that additional cleaning is required depending on the environment information, the robot cleaner 100 may determine that the depth level is 3.

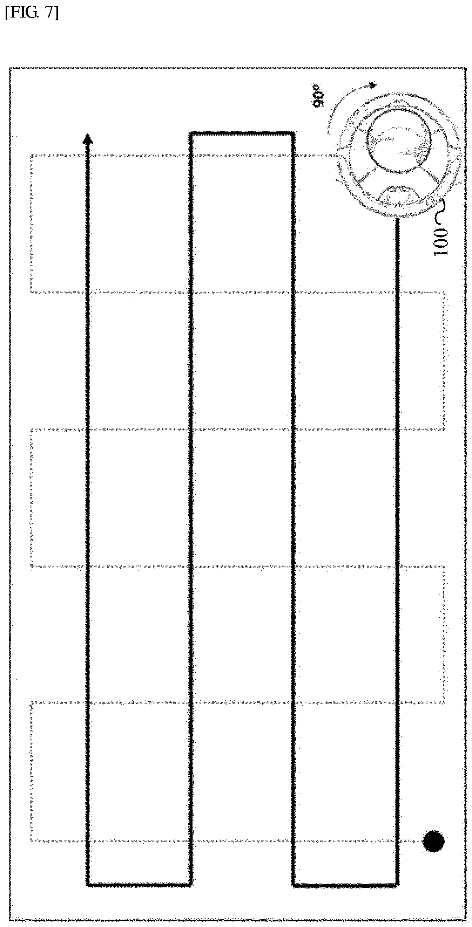

In this case, as illustrated in FIG. 7, the robot cleaner 100 rotates by 90 degrees with respect to a proceeding direction in which the primary traveling is currently finished, thereby making it possible to determine a new proceeding direction and secondarily proceed depending on a second grating traveling pattern.

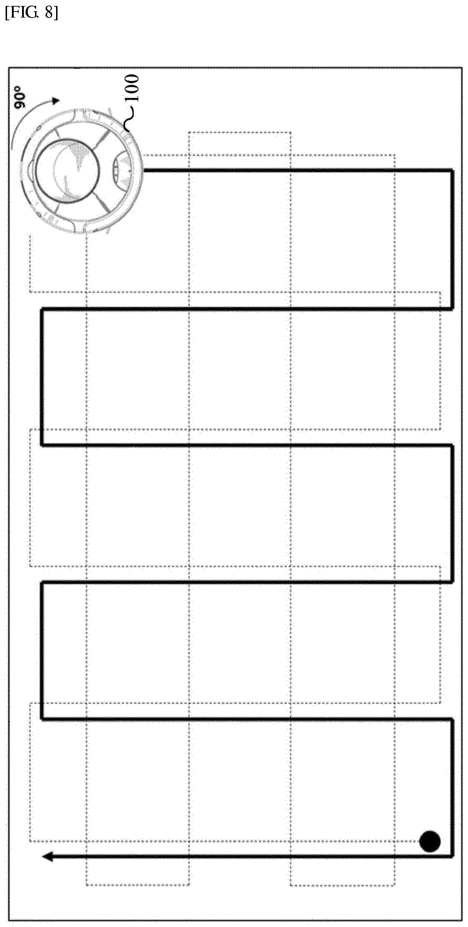

In addition, when traveling depending on the second grating traveling pattern is finished, as illustrated in FIG. 8, the robot cleaner 100 may decrease the depth level to 2, and rotate by 90 degrees with respect to a proceeding direction in which secondary traveling is currently finished, thereby making it possible to again determine a new proceeding direction and tertiarily proceed depending on a third grating traveling pattern.

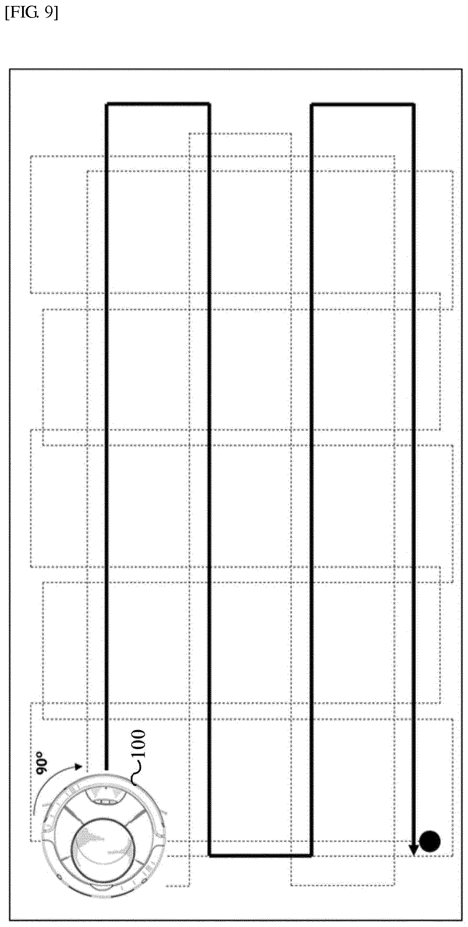

In addition, when traveling depending on the third grating traveling pattern is finished, as illustrated in FIG. 9, the robot cleaner 100 may decrease the depth level to 1, and rotate by 90 degrees with respect to a proceeding direction in which tertiary traveling is currently finished, thereby making it possible to again determine a new proceeding direction and quaternarily proceed depending on a fourth grating traveling pattern.

As described above, according to an exemplary embodiment of the present invention, repeated performance of the grating traveling patterns depending on the depth level is conducted, thereby making it possible to more effectively remove dust, pollutants, or the like, remaining in a cleaning area.

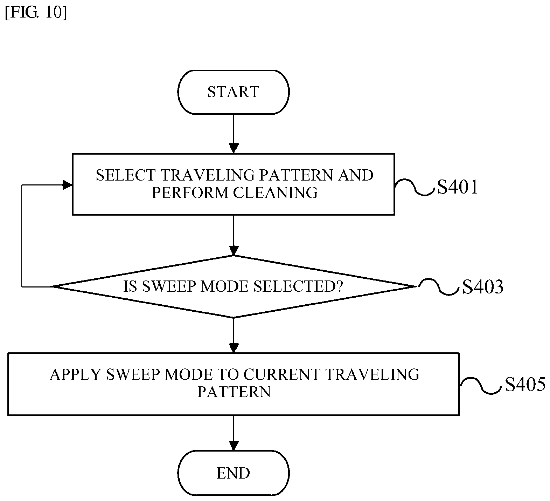

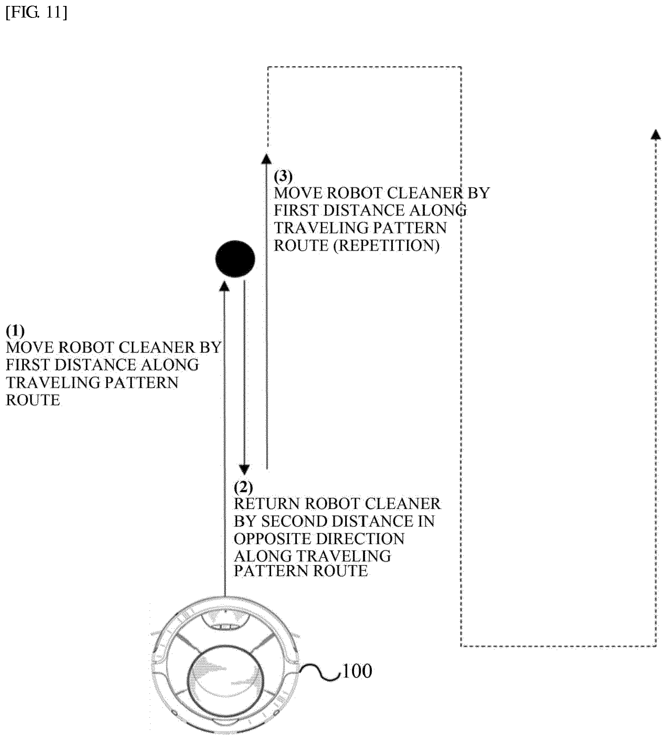

FIGS. 10 and 11 are flow charts for describing a method for controlling a robot cleaner according to another exemplary embodiment of the present invention.

Referring to FIG. 10, the robot cleaner 100 selects a traveling pattern and performs cleaning (S401).

The control unit 110 of the robot cleaner 100 may select an appropriate traveling mode depending on the user input or the scheduling information and perform the cleaning.

Then, the robot cleaner 100 decides whether or not a sweep mode is selected (S403), and applies the sweep mode to a current traveling pattern (S405) in the case in which the sweep mode is selected.

The user may command the robot cleaner to apply the sweep mode through the input unit 120. The control unit 110 may perform a control so that the current traveling pattern is operated in the sweep mode when the sweep mode command is recognized.

Here, the sweep mode according to an exemplary embodiment of the present invention may be generally an additional pattern applied to a dustcloth cleaning mode of the robot cleaner 100 including the water supplying unit 190. A dustcloth cleaning effect may be improved by applying a pattern of the sweep mode, and FIG. 11 illustrates a pattern change of a grating traveling pattern in the case in which the sweep mode is applied.

As illustrated in FIG. 11, in the case in which the sweep mode is applied, the control unit 110 controls the robot cleaner 100 to periodically repeat a process in which the robot cleaner 100 moves by a first distance along a predetermined traveling pattern route and then returns by a second distance in an opposite direction along the traveling pattern route, thereby making it possible to allow the robot cleaner 100 to perform cleaning while repeatedly moving along the same route. Here, for the purpose of normal proceeding, the second distance needs to be shorter than the first distance. Preferably, the second distance may correspond to a half of the first distance. The robot cleaner may repeatedly move twice or more in different directions along the traveling pattern route by the operation as described above, and since pollutants are differently accumulated depending on directions in a cotton cleaner such as dustcloth, the dustcloth cleaning effect may be further improved by the configuration as described above.

In addition, the control unit 110 may perform a direction control operation such as avoidance depending on an existing traveling pattern, or the like, in the case in which an obstacle is detected in a state to which the sweep mode is applied.

The methods for controlling a robot cleaner according to various exemplary embodiments of the present invention described above may be implemented by program codes and be provided in the respective servers or apparatuses in a state in which it is stored in various non-transitory computer-readable media.

The non-transitory computer-readable medium is not a medium that stores data therein for a while, such as a register, a cache, a memory, or the like, but means a medium that semi-permanently stores data therein and is readable by a device. In detail, various applications or programs described above may be stored and provided in the non-transitory computer-readable medium such as a compact disk (CD), a digital versatile disk (DVD), a hard disk, a Blu-ray disk, a universal serial bus (USB), a memory card, a read only memory (ROM), or the like.

## Claims

1. A robot cleaner (199) comprising:
an input unit (120) receiving a user input;
a storing unit (150) storing traveling patterns for traveling the robot cleaner (100) therein; and
a control unit (110),
**characterized in that** the control unit (110)-controls primary traveling of the robot cleaner (100) on the basis of the traveling patterns stored in the storing unit depending on the user input and determines a depth for additional deep cleaning of area already cleaned by the primary traveling depending on environment information collected at the time of the primary traveling of the robot cleaner (100).

2. The robot cleaner (100) of claim 1, wherein the control unit (110) determines traveling patterns for each order depending on the depth, and additionally controls the traveling of the robot cleaner (100) depending on the traveling patterns determined for each order after the primary traveling is finished.

3. The robot cleaner (100) of claim1 or 2, wherein the control unit (110) determines the depth on the basis of a battery remaining capacity of a power supply unit (195) of the robot cleaner (100) predicted after the primary traveling.

4. The robot cleaner (100) of any one of claims 1 to 3, further comprising a sensor unit (130) measuring an amount of introduced dust depending on the traveling of the robot cleaner (100),
wherein the control unit (110) determines the depth depending on the amount of introduced dust measured in the sensor unit (130) during the primary traveling, and/or wherein the control unit (110) determines the number of times of repetition of a specific traveling pattern depending on the determined depth.

5. The robot cleaner (100) of claim 4, wherein the specific traveling pattern includes a grating traveling pattern, and
the control unit (110) controls the robot cleaner (100) to rotate at the same place to change an initial direction of the robot cleaner (00)1 by 90 degrees, whenever the grating traveling pattern repeatedly starts.

6. The robot cleaner (100) of any one of claims 1 to 5, wherein the control unit (110) determines the depth on the basis of the environment information accumulated up to a point in time in which the primary traveling is finished, and the environment information includes map information corresponding to a space in which the robot cleaner (100) is traveled.

7. The robot cleaner (100) of any one of claims 1 to 6, further comprising:
a cleaning unit (180) performing cleaning depending on the traveling of the robot cleaner (100); and a water supplying unit (190) supplying water to a cleaner attached to the cleaning unit (180),
wherein the control unit (110) applies characteristics of the robot cleaner (100) returned by a second distance shorter than a first distance along a predetermined route when the robot cleaner (100) is traveled by the first distance along the predetermined route, with respect to a current traveling pattern, in the case in which a sweep mode is selected depending on the user input.

8. The robot cleaner (100) of claim 4, wherein the control unit (110) determines the number of times of repetition of a specific traveling pattern depending on the determined depth and controls the robot cleaner (100) to move to a zone in which the amount of introduced dust is equal to or larger than a predetermined value and to perform the repetition of the specific traveling pattern by the number on the zone on the basis of map information generated depending on the primary traveling.

9. A method for controlling a robot cleaner, **characterized in that** it comprises the following steps
storing traveling patterns for traveling the robot cleaner;
receiving a user input;
controlling primary traveling of the robot cleaner on the basis of the stored traveling patterns depending on the user input; and
determining a depth for additional deep cleaning of area already cleaned by the primary traveling depending on environment information collected at the time of the primary traveling of the robot cleaner.

10. The method for controlling a robot cleaner of claim 9, wherein the determining of the depth includes determining the depth on the basis of a battery remaining capacity of a power supply unit of the robot cleaner predicted after the primary traveling.

11. The method for controlling a robot cleaner of any one of claims 9 to 10, further comprising measuring an amount of introduced dust depending on the traveling of the robot cleaner,
wherein the determining of the depth includes determining the depth depending on the amount of introduced dust measured during the primary traveling.

12. The method for controlling a robot cleaner of any one of claim 9 to 11, further comprising determining the number of times of repetition of a specific traveling pattern depending on the determined depth.

13. The method for controlling a robot cleaner of claim 12, wherein the specific traveling pattern includes a grating traveling pattern,
the method for controlling a robot cleaner further comprising controlling the robot cleaner to rotate at the same place to change an initial direction of the robot cleaner by 90 degrees, whenever the grating traveling pattern repeatedly starts.

14. The method for controlling a robot cleaner of any one of claims 9 to 13, further comprising applying characteristics of the robot cleaner returned by a second distance shorter than a first distance along a predetermined route when the robot cleaner is traveled by the first distance along the predetermined route, with respect to a current traveling pattern, in the case in which a sweep mode is selected depending on the user input.

15. A computer readable storage medium comprising instructions which, when executed by a computer, cause the computer to carry out the method for controlling a robot cleaner of any one of claims 9 to 14.

## Patentansprüche

1. Reinigungsroboter (199), umfassend:
eine Eingabeeinheit (120), die eine Benutzereingabe empfängt;
eine Speichereinheit (150), die Bewegungsmuster für ein Bewegen des Reinigungsroboters (100) darin speichert; und
eine Steuereinheit (110);
**dadurch gekennzeichnet, dass** die Steuereinheit (110) eine Primärbewegung des Reinigungsroboters (100) basierend auf den Bewegungsmustern, die in der Speichereinheit gespeichert sind, in Abhängigkeit von der Benutzereingabe steuert und eine Tiefe für ein zusätzliches Tiefenreinigen eines Bereichs, der durch die Primärbewegung bereits gereinigt wurde, in Abhängigkeit von Umgebungsinformationen, die zum Zeitpunkt der Primärbewegung des Reinigungsroboters (100) gesammelt wurden, bestimmt.

2. Reinigungsroboter (100) nach Anspruch 1, wobei die Steuereinheit (110) Bewegungsmuster für jeden Auftrag in Abhängigkeit von der Tiefe bestimmt und zusätzlich die Bewegung des Reinigungsroboters (100) in Abhängigkeit von den Bewegungsmustern steuert, die für jeden Auftrag bestimmt wurden, nachdem die Primärbewegung beendet ist.

3. Reinigungsroboter (100) nach Anspruch 1 oder 2, wobei die Steuereinheit (110) die Tiefe basierend auf einer Batterierestkapazität einer Stromversorgungseinheit (195) des Reinigungsroboters (100), die nach der Primärbewegung vorausgesagt wurde, bestimmt.

4. Reinigungsroboter (100) nach einem der Ansprüche 1 bis 3, ferner eine Sensoreinheit (130) umfassend, die eine Menge eingebrachten Staubs in Abhängigkeit von der Bewegung des Reinigungsroboters (100) misst,
wobei die Steuereinheit (110) die Tiefe in Abhängigkeit von der Menge eingebrachten Staubs, die in der Sensoreinheit (130) während der Primärbewegung gemessen wurde, bestimmt und/oder wobei die Steuereinheit (110) die Anzahl der Wiederholungen eines spezifischen Bewegungsmusters in Abhängigkeit von der bestimmten Tiefe bestimmt.

5. Reinigungsroboter (100) nach Anspruch 4, wobei das spezifische Bewegungsmuster ein Gitter-Bewegungsmuster beinhaltet und
die Steuereinheit (110) den Reinigungsroboter (100) dazu steuert, sich an der gleichen Stelle zu drehen, um eine anfängliche Richtung des Reinigungsroboters (00)1 um 90 Grad zu ändern, wann immer das Gitter-Bewegungsmuster wiederholt beginnt.

6. Reinigungsroboter (100) nach einem der Ansprüche 1 bis 5, wobei die Steuereinheit (110) die Tiefe basierend auf den Umgebungsinformationen bestimmt, die bis zu einem Zeitpunkt gesammelt wurden, zu dem die Primärbewegung beendet ist, und die Umgebungsinformationen Karteninformationen beinhalten, die einem Raum entsprechen, in dem sich der Reinigungsroboter (100) bewegt.

7. Reinigungsroboter (100) nach einem der Ansprüche 1 bis 6, ferner umfassend:
eine Reinigungseinheit (180), die ein Reinigen in Abhängigkeit von der Bewegung des Reinigungsroboters (100) durchführt; und eine Wasserversorgungseinheit (190), dieeinem Reiniger, der an der Reinigungseinheit (180) angebracht ist, Wasser zuführt
wobei die Steuereinheit (110) Eigenschaften des Reinigungsroboters (100) anwendet, zurückgeführt um eine zweite Entfernung, die kürzer als eine erste Entfernung entlang einer vorbestimmten Route ist, wenn der Reinigungsroboter (100) um die erste Entfernung entlang der vorbestimmten Route, in Bezug auf ein derzeitiges Bewegungsmuster in dem Fall bewegt wird, in dem in Abhängigkeit von der Benutzereingabe ein Kehrmodus ausgewählt wurde.

8. Reinigungsroboter (100) nach Anspruch 4, wobei die Steuereinheit (110) die Anzahl der Wiederholungen eines spezifischen Bewegungsmusters in Abhängigkeit von der bestimmten Tiefe bestimmt und den Reinigungsroboter (100) dazu steuert, sich zu eine Zone zu bewegen, in der die Menge eingebrachten Staubs einem vorbestimmten Wert gleich oder größer als dieser ist, und die Wiederholung des spezifischen Bewegungsmusters um die Anzahl an der Zone basierend auf Karteninformationen, die in Abhängigkeit von der Primärbewegung erzeugt wurden, durchzuführen.

9. Verfahren zum Steuern eines Reinigungsroboters, **dadurch gekennzeichnet, dass** es die folgenden Schritte umfasst:
Speichern von Bewegungsmustern zum Bewegen des Reinigungsroboters;
Empfangen einer Benutzereingabe;
Steuern einer Primärbewegung des Reinigungsroboters basierend auf den gespeicherten Bewegungsmustern in Abhängigkeit von der Benutzereingabe; und
Bestimmen einer Tiefe für ein zusätzliches Tiefenreinigen eines Bereichs, der durch die Primärbewegung bereits gereinigt wurde, in Abhängigkeit von Umgebungsinformationen, die zum Zeitpunkt der Primärbewegung des Reinigungsroboters gesammelt wurden.

10. Verfahren zum Steuern eines Reinigungsroboters nach Anspruch 9, wobei das Bestimmen der Tiefe ein Bestimmen der Tiefe basierend auf einer Batterierestkapazität einer Stromversorgungseinheit des Reinigungsroboters, die nach der Primärbewegung vorhergesagt wird, beinhaltet.

11. Verfahren zum Steuern eines Reinigungsroboters nach einem der Ansprüche 9 bis 10, ferner ein Messen einer Menge eingebrachten Staubs in Abhängigkeit von der Bewegung des Reinigungsroboters umfassend,
wobei das Bestimmen der Tiefe ein Bestimmen der Tiefe in Abhängigkeit von der Menge eingebrachten Staubs, die während der Primärbewegung gemessen wurde, beinhaltet.

12. Verfahren zum Steuern eines Reinigungsroboters nach einem der Ansprüche 9 bis 11, ferner ein Bestimmen der Anzahl von Wiederholungen eines spezifischen Bewegungsmusters in Abhängigkeit von der bestimmten Tiefe umfassend.

13. Verfahren zum Steuern eines Reinigungsroboters nach Anspruch 12, wobei das spezifische Bewegungsmuster ein Gitter-Bewegungsmuster beinhaltet,
wobei das Verfahren zum Steuern eines Reinigungsroboters ferner ein Steuern des Reinigungsroboters dazu, sich an der gleichen Stelle zu drehen, umfasst, um eine anfängliche Richtung des Reinigungsroboters um 90 Grad zu ändern, wann immer das Gitter-Bewegungsmuster wiederholt beginnt.

14. Verfahren zum Steuern eines Reinigungsroboters nach einem der Ansprüche 9 bis 13, ferner Anwenden von Eigenschaften des Reinigungsroboters umfassend, zurückgeführt um eine zweite Entfernung, die kürzer als eine erste Entfernung entlang einer vorbestimmten Route ist, wenn der Reinigungsroboter um die erste Entfernung entlang der vorbestimmten Route, in Bezug auf ein derzeitiges Bewegungsmuster in dem Fall bewegt wird, in dem in Abhängigkeit von der Benutzereingabe ein Kehrmodus ausgewählt wurde.

15. Computerlesbares Speichermedium, das Anweisungen umfasst, die, wenn sie von einem Computer ausgeführt werden, den Computer veranlassen, das Verfahren zum Steuern eines Reinigungsroboters nach einem der Ansprüche 9 bis 14 durchzuführen.

## Revendications

1. Robot nettoyeur (199) comprenant :
une unité d'entrée (120) recevant une entrée d'utilisateur ;
une unité d'enregistrement (150) enregistrant des trajectoires de déplacement pour déplacer le robot nettoyeur (100) ; et
une unité de commande (110),
**caractérisé en ce que** l'unité de commande (110) contrôle le premier déplacement du robot nettoyeur (100) sur la base des trajectoires de déplacement enregistrées dans l'unité d'enregistrement en fonction de l'entrée utilisateur et détermine une profondeur pour le nettoyage en profondeur supplémentaire d'une zone déjà nettoyée par le premier déplacement en fonction d'informations d'environnement collectées au moment du premier déplacement du robot nettoyeur (100).

2. Robot nettoyeur (100) selon la revendication 1, l'unité de commande (110) déterminant des trajectoires de déplacement pour chaque ordre en fonction de la profondeur, et contrôle en outre le déplacement du robot nettoyeur (100) en fonction des trajectoires de déplacement déterminées pour chaque ordre après que le premier déplacement est terminé.

3. Robot nettoyeur (100) selon la revendication 1 ou 2, l'unité de commande (110) déterminant la profondeur sur la base d'une capacité de batterie restante d'une unité d'alimentation électrique (195) du robot nettoyeur (100) prévue après le premier déplacement.

4. Robot nettoyeur (100) selon l'une quelconque des revendications 1 à 3, comprenant en outre une unité de capteur (130) mesurant une quantité de poussière introduite en fonction du déplacement du robot nettoyeur (100),
l'unité de commande (110) déterminant la profondeur en fonction de la quantité de poussière introduite mesurée dans l'unité de capteur (130) pendant le premier déplacement, et/ou l'unité de commande (110) déterminant le nombre de répétitions d'une trajectoire de déplacement spécifique en fonction de la profondeur déterminée.

5. Robot nettoyeur (100) selon la revendication 4, la trajectoire de déplacement spécifique comprenant une trajectoire de déplacement en grille, et
l'unité de commande (110) contrôlant le robot nettoyeur (100) pour pivoter sur place afin de modifier une direction initiale du robot nettoyeur (00)1 de 90 degrés, à chaque fois que la trajectoire de déplacement en grille est effectuée de nouveau.

6. Robot nettoyeur (100) selon l'une quelconque des revendications 1 à 5, l'unité de commande (110) déterminant la profondeur sur la base d'informations d'environnement collectées jusqu'à un instant auquel le premier déplacement est terminé, et les informations d'environnement comprenant des informations de carte correspondant à un espace dans lequel le robot nettoyeur (100) est déplacé.

7. Robot nettoyeur (100) selon l'une quelconque des revendications 1 à 6, comprenant en outre :
une unité de nettoyage (180) effectuant un nettoyage en fonction du déplacement du robot nettoyeur (100) ; et une unité d'alimentation en eau (190) alimentant en eau un élément nettoyeur attaché à l'unité de nettoyage (180),
l'unité de commande (110) appliquant des caractéristiques au robot nettoyeur (100) retournées par une deuxième distance plus courte que la première distance sur un itinéraire prédéterminé lorsque le robot nettoyeur (100) est déplacé sur une première distance sur un itinéraire prédéterminé, relativement à une trajectoire de déplacement actuelle, dans le cas où un mode de balayage est sélectionné sur la base de l'entrée d'utilisateur.

8. Robot nettoyeur (100) selon la revendication 4, l'unité de commande (100) déterminant le nombre de répétitions d'une trajectoire de déplacement spécifique en fonction de la profondeur déterminée, et commandant au robot nettoyeur (100) de se déplacer vers une zone dans laquelle la quantité de poussière introduite est supérieure ou égale à une valeur prédéterminée, et de répéter sur la zone la trajectoire de déplacement spécifique avec ce nombre de fois, sur la base d'informations de carte générées en fonction du premier déplacement.

9. Procédé pour contrôler un robot nettoyeur, **caractérisé en ce que** le procédé comprend les étapes suivantes :
enregistrer des trajectoires de déplacement pour déplacer le robot nettoyeur ;
recevoir une entrée d'utilisateur ;
contrôler le premier déplacement du robot nettoyeur sur la base des trajectoires de déplacement enregistrées en fonction de l'entrée d'utilisateur ; et
déterminer une profondeur pour le nettoyage en profondeur supplémentaire de la zone déjà nettoyée par le premier déplacement en fonction d'informations d'environnement collectées au moment du premier déplacement du robot nettoyeur.

10. Procédé pour contrôler un robot nettoyeur selon la revendication 9, la détermination de la profondeur comprenant déterminer la profondeur sur la base d'une capacité de batterie restante d'une unité d'alimentation électrique du robot nettoyeur prévue après le premier déplacement.

11. Procédé pour contrôler un robot nettoyeur selon l'une quelconque des revendications 9 à 10, comprenant en outre mesurer une quantité de poussière introduite en fonction du déplacement du robot nettoyeur,
la détermination de la profondeur comprenant déterminer la profondeur en fonction de la quantité de poussière introduite mesurée pendant le premier déplacement.

12. Procédé pour contrôler un robot nettoyeur selon l'une quelconque des revendications 9 à 11, comprenant en outre déterminer le nombre de répétitions d'une trajectoire de déplacement spécifique en fonction de la profondeur déterminée.

13. Procédé pour contrôler un robot nettoyeur selon la revendication 12, la trajectoire de déplacement spécifique comprenant une trajectoire de déplacement en grille,
le procédé pour contrôler le robot nettoyeur comprenant en outre faire pivoter sur place le robot nettoyeur afin de modifier une direction initiale du robot nettoyeur de 90 degrés, à chaque fois que la trajectoire de déplacement en grille est effectuée de nouveau.

14. Procédé pour contrôler un robot nettoyeur selon l'une quelconque des revendications 9 à 13, comprenant en outre appliquer des caractéristiques du robot nettoyeur retournées par une deuxième distance plus courte que la première distance sur un itinéraire prédéterminé lorsque le robot nettoyeur est déplacé sur la première distance sur un itinéraire prédéterminé, relativement à une trajectoire de déplacement actuelle, dans le cas où un mode de balayage est sélectionné en fonction de l'entrée d'utilisateur.

15. Moyen d'enregistrement pouvant être lu par ordinateur comprenant des instructions, lesquelles, lorsque exécutées par un ordinateur, déclenchent l'exécution par l'ordinateur du procédé pour commander un robot nettoyeur selon l'une quelconque des revendications 9 à 14.
